# EUROPÄISCHE PATENTSCHRIFT

(11) **EP 0 428 824 B1**
(45) Veröffentlichungstag und Bekanntmachung des Hinweises auf die Patenterteilung: **19.01.1994**
(21) Anmeldenummer: 90112222.6
(22) Anmeldetag: 27.06.1990
(51) Int. Cl.: F16H 3/72, F16H 37/04

(54) **Als Drehzahl-Überlagerungsgetriebe ausgebildetes Planetengetriebe**
Planetary transmission consisting of a gearing to superimpose a number of revolutions
Transmission planétaire consistée en engrenage à superposition de vitesse

(30) Priorität: 18.11.1989 DE 3938385
(43) Veröffentlichungstag der Anmeldung: 29.05.1991
(73) Patentinhaber: SCHWÖRER GMBH, D-79871 Eisenbach (DE)
(72) Erfinder: Orlowski, Bernhard, D-7000 Stuttgart 1 (DE); Schwörer, Wilfried, D-7821 Eisenbach 3 (DE)
(74) Vertreter: Pfusch, Volker, Dipl.-Ing.

(56) Entgegenhaltungen:
- FR-A- 938 913
- GB-A- 1 579 380

## Beschreibung

Die Erfindung betrifft ein als Drehzahl-Überlagerungsgetriebe ausgebildetes Planetengetriebe nach dem Oberbegriff des Patentanspruchs 1.

Solche Überlagerungsgetriebe sind an sich bekannt. Sie dienen dazu, Drehzahlen sehr feinfühlig und präzise zu regeln. In der Antriebstechnik werden sie eingesetzt, um eine Antriebsdrehzahl oder das exakte Einstellen des Verhältnisses zweier Drehzahlen zu ermöglichen. Durch das Zwischenschalten solcher Überlagerungsgetriebe können Probleme von Drehzahlschwankungen wesentlich kostengünstiger beherrscht werden als durch anderenfalls notwenige großvolumige Antriebseinheiten.

Bei einem bekannten Überlagerungsgetriebe der gattungsgemäßen Art ist das Regelgetriebe ein Schneckentrieb. Mit einem solchen Schneckentrieb lassen sich hohe Übersetzungsverhältnisse erreichen, durch die mit kleinen hochdrehenden antriebsmomentschwachen Motoren eine präzise Drehzahlregulierung des Planetengetriebes erzielbar ist. Die realisierbaren hohen Übersetzungsverhältnisse gewährleisten darüber hinaus eine hohe Selbsthemmung des Regelgetriebes, die für die Funktion eines Überlagerungsgetriebes mit einem hochdrehenden kleinen antriebsschwachen Regelantrieb eine notwendige Voraussetzung ist.

Hiervon ausgehend liegt der Erfindung die Aufgabe zugrunde, den Aufbau des Regelgetriebes zu vereinfachen und das Regelgetriebe dadurch kleinerbauend und insgesamt kostengünstiger herzustellen.

Gelöst wird diese Aufgabe durch den Einsatz eines Wolfrom-Getriebes als Regelgetriebe mit den kennzeichnenden Merkmalen des Anspruchs 1.

Um eine gute Führung des drehbaren Hohlrades des Wolfrom-Getriebes unter gleichzeitig geringer Biegemomentbelastung auf die Planetenräder zu erzielen, ist das feststehende Hohlrad in zwei axial mit Abstand zueinander angeordnete Hohlräder aufgeteilt, in denen die Planetenräder kämmen, wobei das drehbare Hohlrad des Wolfrom-Getriebes mit der gegenüber den feststehenden Hohlrädern geringeren Zähnezahl axial zwischen den beiden feststehenden Hohlrädern eingesetzt ist.

Durch eine zusätzliche Außenverzahnung des drehbaren Hohlrades des Wolfrom-Getriebes und eine entsprechende Außenverzahnung des ohne Betätigung des Regelgetriebes an sich ruhenden Hohlrades des Haupt-Planetengetriebes kann die Überlagerungsdrehzahl durch direktes Ineinanderkämmen der Hohlräder des Regel- und des Hauptgetriebes auf recht einfache Weise erreicht werden.

Eine recht kostengünstige Lösung läßt sich dadurch erzielen, daß die Planetenräder des Regelgetriebes keinen Planetenradträger besitzen, sondern durch die ineinanderkämmenden Zähne zwischen Sonnenritzel und Planetenrädern einerseits und Planetenrädern und feststehenden Hohlrädern andererseits ausreichend zentriert sind. Darüber hinaus benötigt auch das drehbare Hohlrad des Regelgetriebes keine Radiallager, da es seine Fixierung zwischen den Planetenrädern des Regelgetriebes und dem Hohlrad des Haupt-Planetengetriebes findet. Die träger- und lagerlose Ausbildung des Regelgetriebes ermöglicht für dieses eine äußerst kleinbauende kostengünstig herzustellende Bauweise.

Die beiden feststehenden Hohlräder des Regelgetriebes lassen sich ohne weiteres in das Gehäuse des Haupt-Planetengetriebes integrieren. Durch eine solche Integration bestehen die für das Regelgetriebe zusätzlich notwendigen Teile nur noch aus einem Sonnenrad, den Planetenrädern sowie einem innen- und außen verzahnten drehbaren Hohlrad, von denen das Sonnenrad durch einen Motor antreibbar ist. Nicht erforderlich sind irgendwelche besonderen Lager in dem Regelgetriebe, wodurch dessen preisgünstige Herstellung und kleine Bauweise bedingt sind.

Ein Ausführungsbeispiel der Erfindung ist in der Zeichnung dargestellt.

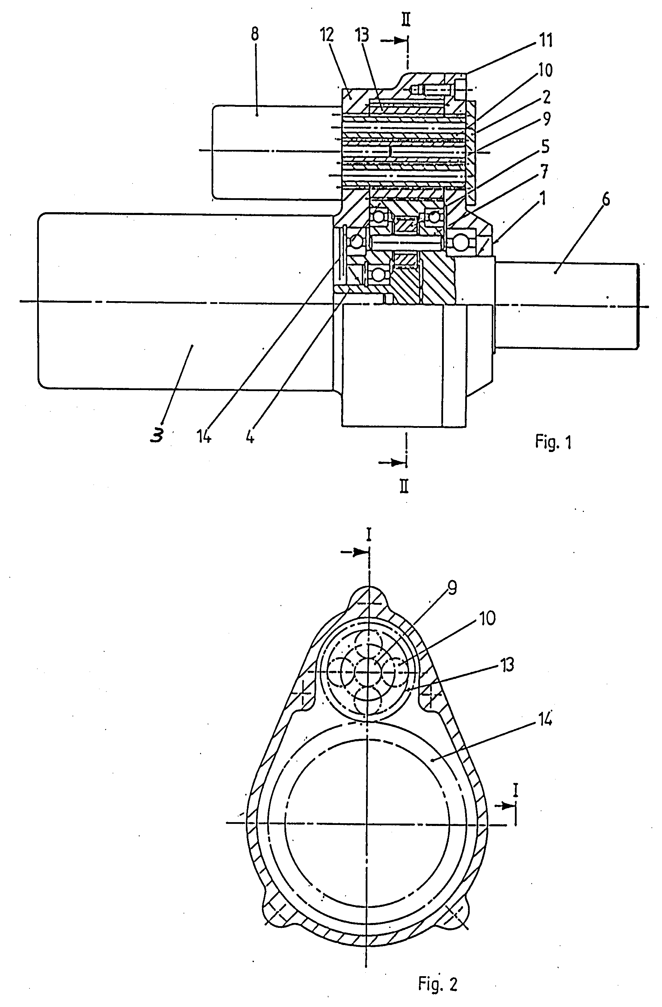

Es zeigen
- Fig. 1: ein Überlagerungsgetriebe teils im Schnitt, teils in Ansicht,
- Fig. 2: einen Schnitt durch das Überlagerungsgetriebe nach Linie II-II, in dem die Einzelteile des Wolfrom-Regelgetriebes lediglich schematisch und von dem Haupt-Planetengetriebe ausschließlich das Hohlrad andeutungsweise dargestellt sind.

Das Überlagerungsgetriebe setzt sich in seinen Hauptbestandteilen zusammen aus einem Haupt- Planetengetriebe 1 und einem mit diesem zusammenwirkenden Regelgetriebe 2.

Bei dem Haupt-Planetengetriebe 1 treibt ein Antriebsmotor 3 ein Sonnenrad 4 an, das über Planetenräder 5 einen mit einer Abtriebswelle 6 starr verbundenen Planetenradträger 7 in Rotation versetzt. Das ins Langsame erzielbare Übersetzungsverhältnis kann etwa bis zu i= 10 liegen.

Zur Drehzahlveränderung bzw. Drehzahlregulierung des Planetengetriebes 1 dient das Regelgetriebe 2, das nach dem Prinzip eines Wolfrom-Getriebes arbeitet.

Im einzelnen besteht das Regelgetriebe 2 aus einem durch einen Regelmotor 8 angetriebenen Sonnenrad 9, von diesem angetriebenen Planetenrädern 10, sowie zwei feststehenden Hohlrädern 11 und 12 und einem drehbaren Hohlrad 13. Die Planetenräder 10, von denen hier insgesamt vier Stück gegenüberliegend vorhanden sind, kämmen trägerlos in den Gegenzähnen des Sonnenrads 9 einerseits und der Hohlräder 11 und 12 andererseits.

Entsprechend dem Prinzip eines Wolfrom-Getriebes besitzt das drehbare Hohlrad 13 eine Innenverzahnung mit weniger Zähnen als die beiden feststehenden Hohlräder 11 und 12. Das Übersetzungsverhältnis des Regelgetriebes 2 wird bestimmt von den Zähnezahlen des Sonnennrades 9 sowie des feststehenden und drehenden Hohlrades 12 bzw. 13. Im vorliegenden Fall, in dem vier Planetenräder 10 in dem Regelgetriebe 2 verwendet werden, ist bei einer Differenz der Zähnezahl von vier ein Übersetzungsverhältnis bis zu etwa i= 300 erzielbar, wobei ab ca. i = 50 Selbsthemmung erreichbar ist.

Das drehbare Hohlrad 13 des Regelgetriebes ist nicht nur innen, sondern auch außen verzahnt. Mit der Außenverzahnung kämmt das Hohlrad 13 des Regelgetriebes in dem bei Nichtbetätigung des Regelgetriebes an sich stillstehenden Hohlrad 14 des Haupt-Planetengetriebes.

Die Hohlräder 11 und 12 des Planetengetriebes 1 sind Teile des Planetengetriebe 1-Gehäuses. Die Innenverzahnung dieser Hohlräder kann auf wirtschaftlich günstige Weise gezogen werden. Damit ist das Regelgetriebe insgesamt äußerst kostengünstig herstellbar. Diese kostengünstige Herstellbarkeit sowie die durch den erfindungsgemäßen Aufbau erzielbare kleine Baugröße sind wesentliche Vorteile des erfindungsgemäßen Überlagerungsgetriebes gegenüber den aus dem Stand der Technik bekannten Überlagerungs-Getrieben, bei denen das Regelgetriebe als Schneckentrieb ausgebildet ist.

Bei einem Einsatz des erfindungsgemäßen Überlagerungsgetriebes zum Positionieren und zur Drehzahlfeinregulierung soll das Regelgetriebe jeweils selbsthemmend sein. Für andere Anwendungszwecke des Überlagerungsgetriebes wie beispielsweise bei Überholgetrieben von Werkzeugmaschinen oder bei Textilmaschinen kann das erfindungsgemäße Regelgetriebe auch ohne Selbsthemmung ausgebildet werden.

## Patentansprüche

1. Als Drehzahl-Überlagerungsgetriebe ausgebildetes Planetengetriebe (1) mit An- und Abtrieb über das Sonnenrad (4) bzw. den Planetenradträger (7), bei dem die Überlagerungsdrehzahl dem Hohlrad (14) des Planetengetriebes (2) mit Hilfe eines Regelgetriebes aufgegeben wird,
**dadurch gekennzeichnet,**
daß das Regelgetriebe (2) ein Wolfrom-Getriebe ist, bei dem ein von einem Regelmotor (2) angetriebenes Sonnenrad (9) in mindestens zwei um das Sonnenrad (9) kreisenden in mindestens einem feststehenden ersten Hohlrad (11,12) geführten Planetenrädern (10) kämmt, und bei dem die Planetenräder gleichzeitig noch in ein koaxial zu dem feststehenden ersten Hohlrad (11,12) angeordnetes drehbares zweites Hohlrad (13) mit einer gegenüber dem ersten Hohlrad (11,12) unterschiedlichen, speziell geringeren, Zähnezahl eingreifen, wobei das zweite Hohlrad (13) in dem Hohlrad (14) des Planeten-Hauptgetriebes (1) kämmt.

2. Regelgetriebe des Planetengetriebes nach Anspruch 1,
**dadurch gekennzeichnet,**
daß zwei axial mit Abstand voneinander koaxial angeordnete Hohlräder (11,12) die Funktion des feststehenden Regelgetriebe-Hohlrades ausüben, wobei das drehbare zweite Hohlrad (13) zwischen den beiden axial getrennten feststehenden Hohlrädern (11,12) liegt.

3. Regelgetriebe nach Anspruch 1 oder 2,
**dadurch gekennzeichnet,**
daß dessen drehbares Hohlrad (13) eine Außenverzahnung zum Antrieb des ebenfalls außen verzahnten Hohlrades (14) des Haupt-Planetengetriebes (1) besitzt.

4. Regelgetriebe des Planetengetriebes nach einem der vorhergehenden Ansprüche,
**dadurch gekennzeichnet,**
daß die Planetenräder (10) trägerlos zischen dem Sonnenritzel (9) und dem feststehenden Hohlrad (11,12) kämmen.

5. Regelgetriebe des Planetengetriebes nach einem der vorhergehenden Ansprüche ,
**dadurch gekennzeichnet,**
daß die beiden feststehenden Hohlräder (11,12) des Regelgetriebes (2) fest in das Gehäuse des Haupt-Planetengetriebes (1) eingeformt sind.

## Claims

1. Planetary gear (1), constructed as rotational speed super-imposition gear (speed heterodyne gear), with input and output via the sun wheel (4) and pinion cage (7) respectively, in which the superimposition speed is imparted to the hollow wheel (14) of the planetary gear (2) by means of a control gear, characterized in that the control gear (2) is a Wolfrom gear, in which a sun wheel (9), driven by a control motor (2), meshes with at least two planet pinions (10), orbiting about the sun wheel (9) and guided in at least one stationary, first hollow wheel (11, 12), and in which the planet pinions simultaneously engage in a rotatable, second hollow wheel (13), disposed coaxially to the stationary, first hollow wheel (11, 12), and having a differing number of teeth, especially smaller number, than the first hollow wheel (11, 12), the second hollow wheel (13) meshing with the hollow wheel (14) of the main planetary gear (1).

2. Control gear of the planetary gear according to Claim 1, characterized in that two hollow wheels (11, 12), disposed coaxially at a distance from each other, fulfil the function of the stationary hollow wheel for the control gear, the rotatable, second hollow wheel (13) being situated between the two axially separated, stationary hollow wheels (11, 12).

3. Control gear according to Claim 1 or 2, characterized in that its rotatable hollow wheel (13) possesses an external set of teeth for driving the hollow wheel (14) of the main planetary gear (1), also provided with external teeth.

4. Control gear of the planetary gear according to one of the preceding Claims, characterized in that the planet pinions (10) mesh without a supporting cage between the sun wheel (9) and the stationary hollow wheel (11, 12).

5. Control gear of the planetary gear according to one of the preceding Claims, characterized in that the two stationary hollow wheels (11, 12) of the control gear (2) are integrally formed in the casing of the main planetary gear (1).

## Revendications

1. Train planétaire (1) réalisé sous forme d'engrenage à superposition de vitesse, avec un entraînement primaire et secondaire par l'intermédiaire d'une roue solaire (4) et/ou du porte-pignons satellites (7), sur lequel la vitesse de superposition est transmise à la roue creuse (14) du train planétaire (2) par un variateur, caractérisé en ce que le variateur (2) est un engrenage Wolfrom, sur lequel une roue solaire (9), entraînée par un moteur à vitesse variable (2), engrène dans deux satellites (10) au moins, tournant autour de la roue solaire (9) et guidés dans une première roue creuse (11, 12), au moins, stationnaire, et sur lequel les satellites engrènent simultanément dans une seconde roue creuse (13) rotative, disposée dans l'axe de la première roue creuse (11, 12) stationnaire, et munie d'un nombre de dents différent, spécialement inférieur, par rapport à la première roue creuse (11, 12), la seconde roue creuse (13) engrenant dans la roue creuse (14) du train planétaire principal (1).

2. Variateur du train planétaire suivant la revendication 1, caractérisé en ce que deux roues creuses (11, 12), coaxiales entre elles et disposées à distance l'une de l'autre dans le sens axial, exercent la fonction de la roue creuse stationnaire du variateur, la seconde roue creuse rotative (13) se situant entre les deux roues creuses stationnaires (11, 12), séparées dans le sens axial.

3. Variateur suivant l'une des revendications 1 et 2, caractérisé en ce que sa roue creuse rotative (13) présente une denture extérieure pour l'entraînement de la roue creuse (14), également munie d'une denture extérieure, du train planétaire principal (1).

4. Variateur du train planétaire suivant l'une quelconque des revendications précédentes, caractérisé en ce que les satellites (10) engrènent sans porte-pignons entre la roue solaire (9) et la roue creuse stationnaire (11, 12).

5. Variateur du train planétaire suivant l'une quelconque des revendications précédentes, caractérisé en ce que les deux roues creuses stationnaires (11, 12) du variateur (2) sont intégrées au carter du train planétaire principal (1).
